# EUROPÄISCHE PATENTSCHRIFT

(11) **EP 2 015 700 B1**
(45) Veröffentlichungstag und Bekanntmachung des Hinweises auf die Patenterteilung: **29.09.2010**
(21) Anmeldenummer: 07724875.5
(22) Anmeldetag: 04.05.2007
(51) Int. Cl.: A61C 8/00

(54) **ZAHNPROTHESEN-TRÄGERIMPLANTAT**
CARRIER IMPLANT FOR DENTAL PROSTHESES
IMPLANT-SUPPORT POUR PROTHÈSES DENTAIRES

(30) Priorität: 06.05.2006 DE 102006021181
(43) Veröffentlichungstag der Anmeldung: 21.01.2009
(73) Patentinhaber: Laux, Thomas, 86356 Steppach/Neusäss (DE)
(72) Erfinder: Laux, Thomas, 86356 Steppach/Neusäss (DE)
(74) Vertreter: Gallo, Wolfgang
(86) Internationale Anmeldenummer: PCT/EP2007/003950
(87) Internationale Veröffentlichungsnummer: WO 2007/128516

(56) Entgegenhaltungen:
- DE-B- 1 566 242
- DE-B3- 10 336 537
- US-A- 4 881 897

## Beschreibung

Die Erfindung betrifft ein Zahnprothesen-Trägerimplantat. Damit ist gemeint ein im Kiefer implantierbarer Träger zur Aufnahme einer Einzelzahnprothese in Gestalt einer Zahnkrone oder einer Mehrzahnprothese.

Zahnprothesen-Trägerimplantate nach dem Oberbegriff des Anspruchs 1 sind aus der DE 101 49 166 C1 und aus der DE 103 36 537 B3 bekannt. Bei der Anordnung nach der DE 101 49 166 C1 besteht das Trägerimplantat aus einem implantierbaren Trägerpfosten, der aus einem in den Kiefer zu implantierenden Wurzelabschnitt und einem darauf aufgeschraubten Pfostenabschnitt aufgebaut ist. Auf dem Trägerpfosten ist eine zweiteilige Trägerkappe angeordnet, die aus einem hülsenförmigen Unterteil und einem kappenförmigen Oberteil besteht. Das hülsenförmige Unterteil der Trägerkappe ist fest mit dem Pfostenteil des Trägerpfostens verbunden, und das kappenförmige Oberteil der Trägerkappe ist mit einem gewissen Bewegungsspiel formschlüssig auf dem Unterteil montiert. Zwischen dem Unterteil und dem Oberteil der zweiteiligen Trägerkappe sind, jeweils zwischen einander axial zugewandten Ringschultern der beiden Teile, eine Schraubendruckfeder und ein als Gummiring ausgebildeter Dichtungsring angeordnet, der ebenfalls als Federelement dient. Die Schraubendruckfeder drängt Oberteil und Unterteil auseinander, und der Dichtungsring wirkt als Stoßdämpfer. Außerdem überlappen sich Unterteil und Oberteil der Trägerkappe axial über eine gewisse Distanz mit miteinander zusammenwirkenden Zylinderflächen. Bei der Anordnung nach der DE 103 36 537 ist die Trägerkappe einteilig ausgebildet und formschlüssig mit dem Trägerpfosten verbunden, wobei wiederum eine Schraubendruckfeder als Federelement die Trägerkappe und den Trägerpfosten in Richtung voneinander weg vorspannt. Auch bei dieser Anordnung überlappen sich Trägerkappe und Trägerteil über eine gewisse Distanz mit miteinander zusammenwirkenden Zylinderflächen.

Aufgabe der Erfindung ist es, ein derartiges Zahnprothesen-Trägerimplantat noch weiter zu verbessern.

Im Hinblick darauf beinhaltet die vorliegende Erfindung ein Zahnprothesen-Trägerimplantat mit den Merkmalen des Patentanspruchs 1.

Vorteilhafte Ausgestaltungen der Erfindung sind Gegenstand der Unteransprüche.

Bei dem erfindungsgemäßen Zahnprothesen-Trägerimplantat kann die Trägerkappe, die zur Aufnahme der Zahnkrone oder Zahnprothese dient, nicht nur einteilig und damit einfach ausgebildet sein, sondern weist gegenüber dem bekannten Trägerimplantaten erhebliche Vorteile auf, denn Trägerkappe und Trägerpfosten sind durch die Verbindung über das zwischen diese Teile eingebrachte und dort abgebundene elastische Material nicht nur axial elastisch federnd um ein gewisses Maß relativ zueinander beweglich, sondern auch seitwärts bzw. winkelmäßig. Eine formschlüssige Verbindung mit dem Trägerpfosten ist möglich, aber nicht notwendig. Zwischen dem Trägerpfosten und der Trägerkappe ist ein wiederum Federelement, beispielsweise in Gestalt einer Schraubendruckfeder, angeordnet, das die Trägerkappe axial in Richtung vom Trägerpfosten weg vorspannt. Der gesamte Spaltraum zwischen Trägerpfosten und Trägerkappe ist durch ein elastisches Material ausgefüllt, das in flüssiger Form eingebracht und an Ort und Stelle abgebunden wird und den Trägerpfosten mit der Trägerkappe unter Ermöglichung eines gewissen Bewegungsspiels elastisch und abdichtend verbindet. Das Bewegungsspiel ist dabei, wie gesagt, nicht nur in axialer Richtung als Stoßdämpferfunktion gegeben, sondern auch in Gestalt einer seitlichen oder winkelmäßigen Auslenkung, so dass beim Aufsetzen der Krone oder der Prothese ein Fluchtungs- oder Positionsfehlerausgleich möglich ist. Die elastische Stoßdämpferwirkung des elastischen Materials zwischen Trägerkappe und Trägerpfosten addiert sich zur Federkraft der Feder. Dabei unterstützen sich die Feder und das elastische Material in ihrer Dämpfungswirkung nicht nur gegenseitig, sondern die Feder wird bei der erfindungsgemäßen Anordnung bedeutend weniger beansprucht, als dies bei den beiden eingangs erwähnten bekannten Trägerimplantaten der Fall ist, so dass keine Ermüdung der Feder zu befürchten ist.

Statt einer Trägerkappe kann auch ein andersartiges Trägerteil, beispielsweise in Gestalt eines Trägerkopfs mit beliebiger Form vorgesehen sein, der ebenso wie eine Trägerkappe mit dem Trägerpfosten verbunden ist.

Die erfindungsgemäße Anordnung hat gegenüber dem bekannten Trägerimplantat nicht nur den Vorteil eines vielseitigeren Bewegungsspiels zwischen Trägerpfosten und Trägerkappe bzw. Trägerteil, sondern auch den Vorteil einer einfacheren Gestaltung der Bauteile, einer einfacheren Montage und einer optimalen Abdichtung zwischen Trägerpfosten und Trägerkappe bzw. Trägerteil. Im Gegensatz zu den Verhältnissen bei dem bekannten Trägerimplantat, wo zwischen den relativ zueinander beweglichen Teilen der Trägerkappe, insbesondere im axialen Überlappungsbereich von Unterteil und Oberteil der Trägerkappe, Undichtigkeiten auftreten können, ist bei der erfindungsgemäßen Anordnung absolute Dichtigkeit zwischen Trägerpfosten und Trägerkappe bzw. Trägerteil gegeben, und das Eindringen von Speichel, anderen Stoffen und womöglich von Keimen ist gänzlich ausgeschlossen.

Bei dem erfindungsgemäßen Trägerimplantat hat das Federelement zwischen Trägerpfosten und Trägerkappe bzw. Trägerteil hauptsächlich die Funktion, bei der Montage, solange das elastische Material zwischen Trägerpfosten und Trägerkappe bzw. Trägerteil noch flüssig ist, Trägerpfosten und Trägerkappe bzw. Trägerteil bis zum Abbinden bzw. Aushärten des elastischen Materials auseinandergedrückt zu halten, damit das elastische Material danach seine Stoßdämpferfunktion und Ausgleichsfunktion ausüben kann. Das Federelement kann dabei allerdings, wie oben schon erwähnt, unterstützend wirken.

Zwei Ausführungsbeispiele der Erfindung werden nachstehend unter Bezugnahme auf die anliegenden Zeichnungen mehr im einzelnen beschrieben. In den Zeichnungen zeigt:
- Fig. 1: einen Schnitt durch eine Ausführungsform mit Trägerkappe,
- Fig. 2: einen Schnitt ähnlich Fig. 1 mit leichtem Winkel- versatz der Trägerkappe, und
- Fig. 3: im Schnitt eine zweite Ausführungsform mit Träger- teil zur Aufnahme einer Prothese.

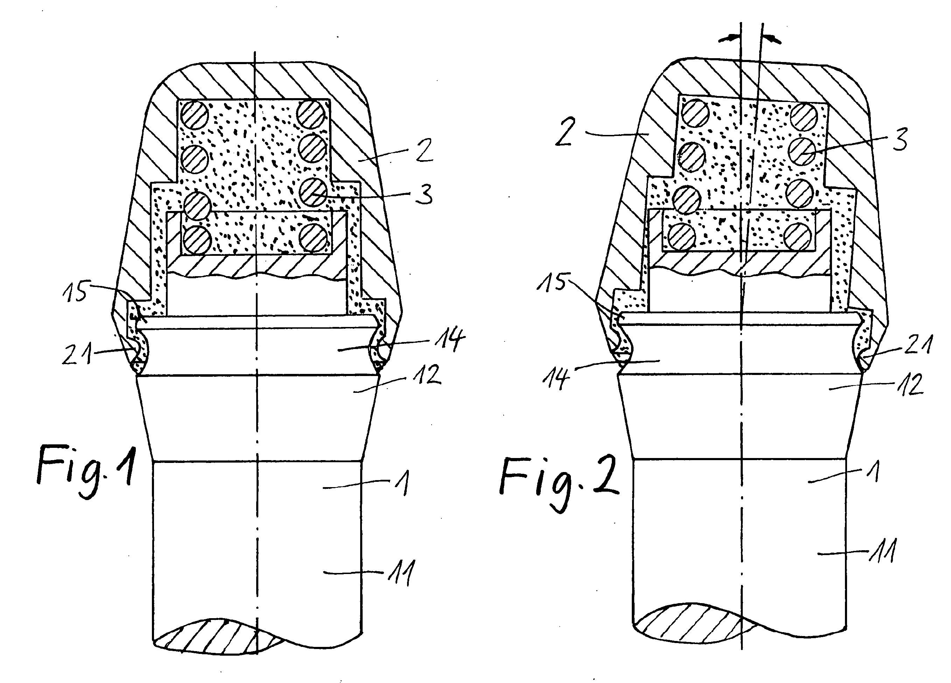

Die in den Fig. 1 und 2 dargestellte Anordnung besteht aus einem Trägerpfosten 1 mit einem unteren Wurzelteil 11, das in den Kiefer implantierbar ist, und einem oberen Pfostenteil 12. Wurzelteil 11 und Pfostenteil 12 können einstückig miteinander ausgebildet sein. Bei den dargestellten Ausführungsformen ist zu beachten, dass die Darstellung schematisiert ist und insbesondere die Darstellung des Wurzelteils 11 nichts über dessen tatsächliche Ausbildung besagt, die jede bekannte Form haben kann.

Über dem Pfostenteil 12 des Trägerpfostens 1 ist eine Trägerkappe 2 angeordnet, die als Trägerelement für eine aufzusetzende Zahnkrone oder Zahnprothese dient.

Eine Schraubendruckfeder 3 ist zwischen der Trägerkappe 2 und dem oberen, einen Federteller 13 bildenden Ende des Trägerpfostens 1 angeordnet und drängt die Trägerkappe 2 axial in Richtung vom Trägerpfosten 1 weg.

Wie aus den Zeichnungen zu entnehmen ist, hat der Pfostenteil 12 des Trägerpfostens 1 im Bereich des Trägerkappenrands eine Ringnut 14, die ein halbrundes Profil haben kann, und in welche ein Ringwulst 21 an der radial inneren Seite des Trägerkappenrands eingreift. Die Anordnung ist dabei so getroffen, dass die Trägerkappe beim Aufsetzen auf den Trägerpfosten mit dem Ringwulst 21 über eine oberhalb der Ringnut 14 gebildete Schrägfläche 15 geführt wird und dann in die Ringnut einrastet, so dass eine Formschlussverbindung zwischen Trägerkappe 2 und Trägerpfosten 1 hergestellt wird.

Vor dem Aufsetzen der Trägerkappe 2 auf den Trägerpfosten werden die Innenflächen der Trägerkappe sowie die im montierten Zustand innerhalb der Trägerkappe gelegenen Flächen des Pfostenteils 12 mit einem geeigneten Primer als Haftvermitler behandelt. Sodann wird die Schraubendruckfeder 3 in die Trägerkappe 2 eingesetzt und flüssiges Silikon oder ein anderes geeignetes elastomerisches Material in der erforderlichen Menge in die Trägerkappe 2 eingefüllt. Sodann werden Trägerkappe und Trägerpfosten durch axiales Zusammenschieben miteinander verbunden, wobei der Wulst 21 am Trägerkappenrand in die Ringnut 14 des Pfostenteils 12 einrastet. Dabei kann die Druckfeder 3 etwas gestaucht werden, und überschüssiges Silikon oder Elastomermaterial quillt heraus. Die Formschlussverbindung zwischen dem Wulst 21 und der Ringnut 14 verhindert ein Wiedertrennen von Trägerkappe 2 und Trägerpfosten 1 unter dem Vorspanndruck der Druckfeder 3, welche die Trägerkappe 2 vom Trägerpfosten 1 weg vorspannt, ohne dass es dazu einer Vorrichtung bedarf.

Nach dem Aushärten oder Abbinden des Silikons bzw. des elastomerischen Materials sind Trägerkappe 2 und Trägerpfosten 1 unter Zwischenschaltung des elastomerischen Materials, das als Puffer- und Federelement sowie als Abdichtung dient, unter Ermöglichung eines gewissen axialen und winkelmäßigen Bewegungsspiels dauerhaft miteinander verbunden. Der mögliche Winkelversatz zwischen Trägerkappe 2 und Trägerpfosten 1 ist in Fig. 2 dargestellt.

Der Trägerpfosten 1 und die Trägerkappe 2 können aus Titan oder aus Zirkoniumoxid hergestellt sein.

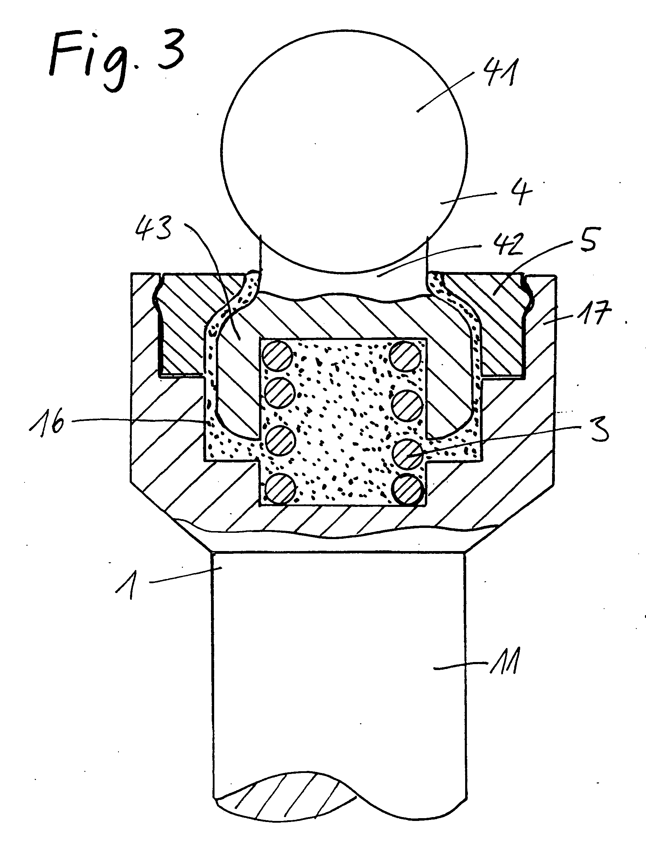

Bei der Ausführungsform nach Fig. 3 ist statt einer Trägerkappe ein Trägerteil 4 vorgesehen, das eine knochenartige Form mit einem Kugelkopf 41 zum Aufsetzen einer Prothese hat. Dieser Kugelkopf 41 ist über einen Halsteil 42 mit einem unteren knaufartigen Teil 43 verbunden, der in einer im oberen Ende des Trägerpfostens 1 gebildete Kammer 16 eingreift, die oben durch eine in den Randteil 17 des Trägerpfostens 1 eingerastete ringförmige Manschette 5 abgeschlossen ist. Zwischen dem Trägerpfosten und dem unteren Teil 43 des Trägerteils 4 ist wiederum eine Schraubendruckfeder 3 angeordnet, und die Kammer 16 ist wiederum mit Silikon oder einem anderen geeigneten elastomerischen Material ausgefüllt.

Bei beiden Ausführungsformen versteht es sich, dass statt einer Schraubendruckfeder 3 auch ein anders gestaltetes Federelement vorgesehen sein kann.

## Patentansprüche

1. Zahnprothesen-Trägerimplantat, besteht aus einem Trägerpfosten (1) und einem darauf mit gewissem Bewegungsspiel angeordneten Trägerelement (2; 4) zur Aufnahme einer Zahnkrone oder einer Zahnprothese, wobei in dem Raum zwischen dem Trägerpfosten (1) und dem Trägerelement (2; 4) ein das Trägerelement (2; 4) vom Trägerpfosten (1) axial wegdrückendes Federelement (3) angeordnet ist,
**dadurch gekennzeichnet, dass** der Trägerpfosten (1) und das Trägerelement (2; 4) über ein elastomerisches Material miteinander verbunden sind, wobei das elastomerische Material in flüssiger Form in den Raum zwischen Trägerpfosten und Trägerelement einbringbar ist und wobei das elastomerishe Material den Raum nach Aushärtung vollständing ausfüllt.

2. Trägerimplantat nach Anspruch 1, wobei das Trägerelement als den obersten Teil des Trägerpfostens übergreifende Trägerkappe (2) ausgebildet ist.

3. Trägerimplantat nach Anspruch 2, wobei zwischen dem oberen Teil (12) des Trägerpfostens (1) und einem Randbereich der Trägerkappe (2) eine in Axialrichtung wirkende Formschlussverbindung (14, 21) vorgesehen ist, welche die Relativbewegungsdistanz der Trägerkappe (2) vom Trägerpfosten (1) weg unter der Vorspannkraft des Federelements (3) begrenzt.

4. Trägerimplantat nach Anspruch 3, wobei die Formschlussverbindung als rastbare Verbindung zwischen mindestens einem am Randbereich der Trägerkappe (2) radial einwärts vorspringenden Rastelement (21) und einem radial außen am Trägerpfosten (1) angeordneten Gegenelement (14, 15) ausgebildet ist.

5. Trägerimplantat nach Anspruch 1, wobei das Trägerelement als Trägerteil (4) mit einem Trägerkopf (41) und einem damit über einen Hals (42) verbundenen verdickten unteren Teil (43) ausgebildet ist, welch letzterer in einer nach oben offenen Kammer (16) im Trägerpfosten (1) aufgenommen ist.

6. Trägerimplantat nach Anspruch 5, wobei der verdickte untere Teil (43) des Trägerteils (4) in der Kammer (16) des Trägerpfostens (1) mittels einer Manschette (15) gesichert ist.

7. Trägerimplantat nach einem der Ansprüche 1 bis 6, wobei das Federelement (3) als Schraubendruckfeder ausgebildet ist.

8. Trägerimplantat nach einem der Ansprüche 1 bis 6, wobei das elastomerische Material jeweils mittels eines Haftvermittlers mit den Flächen des Trägerpfostens (1) und des Trägerelements (2; 4) verbunden ist.

## Claims

1. Dental prosthesis carrier implant, consists of a carrier post (1) and a carrier element (2; 4), which is arranged thereon with a certain play, for receiving a dental crown or a dental prosthesis, a spring element (3), pushing the carrier element (2; 4) axially away from the carrier post (1), being arranged in the space between the carrier post (1) and the carrier element (2; 4),
**characterized in that** the carrier post (1) and the carrier element (2; 4) are connected to each other via an elastomeric material, wherein the elastomeric material can be introduced in liquid form into the space between the carrier post and carrier element and wherein the elastomeric material, once cured, completely fills out the space.

2. Carrier implant according to claim 1, wherein the carrier element is embodied as a carrier cap (2) overlapping the top part of the carrier post.

3. Carrier implant according to claim 2, wherein a form-fitting connection (14, 21), which acts in the axial direction and limits the relative movement distance of the carrier cap (2) away from the carrier post (1) under the pretensioning force of the spring element (3), is provided between the upper part (12) of the carrier post (1) and an edge region of the carrier cap (2).

4. Carrier implant according to claim 3, wherein the form-fitting connection is embodied as a lockable connection between at least one locking element (21) protruding radially inwards at the edge region of the carrier cap (2) and a mating element (14, 15) arranged radially externally on the carrier post (1).

5. Carrier implant according to claim 1, wherein the carrier element is embodied as a carrier part (4) with a carrier head (41) and a thickened lower part (43) connected thereto via a neck (42), the thickened lower part being received in an upwardly open chamber (16) in the carrier post (1).

6. Carrier implant according to claim 5, wherein the thickened lower part (43) of the carrier part (4) is secured in the chamber (16) of the carrier post (1) by means of a sleeve (15).

7. Carrier implant according to one of claims 1 to 6, wherein the spring element (3) is embodied as a helical compression spring.

8. Carrier implant according to one of claims 1 to 6, wherein the elastomeric material is connected to the faces of the carrier post (1) and the carrier element (2; 4) in each case by means of an adhesion promoter.

## Revendications

1. Implant support de prothèse dentaire, comprenant un pilier support (1) et un élément support (2 ; 4) disposé dessus avec un certain jeu de déplacement, destiné à recevoir une couronne dentaire ou une prothèse dentaire, dans lequel un élément ressort (3) éloignant par poussée axiale l'élément support (2 ; 4) du pilier support (1) est disposé dans l'espace entre le pilier support (1) et l'élément support (2; 4),
**caractérisé en ce que** le pilier support (1) et l'élément support (2; 4) sont reliés entre eux par l'intermédiaire d'un matériau élastomère, le matériau élastomère pouvant être introduit sous forme liquide dans l'espace entre pilier support et élément support et le matériau élastomère remplissant complètement l'espace après durcissement.

2. Implant support selon la revendication 1, dans lequel l'élément support est réalisé sous la forme de calotte support (2) recouvrant la partie supérieure du pilier support.

3. Implant support selon la revendication 2, dans lequel il est prévu, entre la partie supérieure (12) du pilier support (1) et une zone de bord de la calotte support (2), une liaison solidaire avec correspondance de forme (14, 21) agissant dans le sens axial qui limite la distance d'éloignement relative de la calotte support (2) vers le pilier support (1) sous la force de précontrainte de l'élément ressort (3).

4. Implant support selon la revendication 3, dans lequel la liaison solidaire avec correspondance de forme est réalisée sous la forme de liaison encliquetable entre au moins un élément d'encliquetage (21) faisant saillie radialement vers l'intérieur au niveau de la zone de bord de la calotte support (2) et un élément opposé (14, 15) disposé radialement à l'extérieur sur le pilier support (1).

5. Implant support selon la revendication 1, dans lequel l'élément support est réalisé sous la forme de pièce support (4) avec une tête support (41) et une partie inférieure (43) épaissie reliée à celle-ci par l'intermédiaire d'un col (42), ladite partie inférieure étant logée dans une chambre (16) ouverte vers le haut dans le pilier support (1).

6. Implant support selon la revendication 5, dans lequel la partie inférieure épaissie (43) de la pièce support (4) est bloquée dans la chambre (16) du pilier support (1) au moyen d'un manchon (15).

7. Implant support selon l'une des revendications 1 à 6, dans lequel l'élément ressort (3) est réalisé sous la forme de ressort cylindrique de compression.

8. Implant support selon l'une des revendications 1 à 6, dans lequel le matériau élastomère est relié au moyen d'un agent adhésif aux surfaces respectives du pilier support (1) et de l'élément support (2 ; 4).
